# EUROPEAN PATENT APPLICATION

(11) **EP 4 756 991 A1**
(43) Date of publication of application: **10.06.2026**
(21) Application number: 25215642.7
(22) Date of filing: 13.11.2025
(51) Int. Cl.: H01M 10/61, H01M 10/613, H01M 10/617, H01M 10/6569

(54) **BATTERY BOILING COOLING SYSTEM AND METHOD OF USING BATTERY BOILING COOLING SYSTEM**

(30) Priority: 09.12.2024 KR 20240181837
(71) Applicant: SAMSUNG SDI CO., LTD., Yongin-si, Gyeonggi-do 17084 (KR)
(72) Inventor: CHOI, Sunghoon, Yongin-si, Gyeonggi-do 17084 (KR)
(74) Representative: Maiwald GmbH

(57) **Abstract**

A battery boiling cooling system may include an inlet temperature sensor configured to measure an inlet temperature, which is a temperature of a refrigerant at an inlet position where the refrigerant flows into a cooling flow path, the refrigerant including a phase-change material that changes between liquid and gas phases; an outlet temperature sensor configured to measure an outlet temperature, which is a temperature of the refrigerant at an outlet position where the refrigerant flows out of the cooling flow path; an inlet pressure sensor configured to measure an inlet pressure, which is a pressure of the refrigerant at the inlet position; an outlet pressure sensor configured to measure an outlet pressure, which is a pressure of the refrigerant at the outlet position; and a controller configured to control a flow rate of the refrigerant based on the inlet temperature, the outlet temperature, the inlet pressure, and the outlet pressure.

## Description

### BACKGROUND

### (a) Field

This disclosure relates to a battery boiling cooling system and a method of using a battery boiling cooling system.

### (b) Description of the Related Art

Controlling the temperature of a battery by utilizing latent heat of a phase change of a phase-change material may effectively reduce the temperature rise of the battery and improve temperature uniformity in the battery.

The battery boiling cooling system cools by absorbing heat as the phase-change material changes from liquid to gas when the refrigerant inside the system reaches its phase change temperature.

The battery boiling cooling system is similar to a water cooling system in that the battery boiling cooling system circulates refrigerant using a pump. But the battery boiling cooling system mainly utilizes the latent heat when the liquid changes into the gas, so the battery boiling cooling system may provide much better cooling performance than the water cooling system and has the advantage of high-efficiency cooling with a small flow rate and a small power output. However, the phase-change material is affected by temperature and pressure. The temperature at which the phase change occurs is affected by the pressure of the system, and since the pressure of the system is affected by a range of a region where phase change occurs, the battery boiling cooling system may be challenging to control.

### SUMMARY

Some embodiments of the present disclosure provide a battery boiling cooling system and a method capable of effectively controlling a temperature of a battery through a phase change from liquid to gas.

According to an aspect of the present disclosure a battery boiling cooling system may include an inlet temperature sensor configured to measure an inlet temperature, which may be a temperature of a refrigerant at an inlet position where the refrigerant flows into a cooling flow path, the refrigerant including a phase-change material that changes between liquid and gas phases; an outlet temperature sensor configured to measure an outlet temperature, which may be a temperature of the refrigerant at an outlet position where the refrigerant flows out of the cooling flow path; an inlet pressure sensor configured to measure an inlet pressure, which may be a pressure of the refrigerant at the inlet position; an outlet pressure sensor configured to measure an outlet pressure, which may be a pressure of the refrigerant at the outlet position; and a controller configured to control a flow rate of the refrigerant based on the inlet temperature, the outlet temperature, the inlet pressure, and the outlet pressure.

In some embodiments, the controller may be configured to estimate a phase state of the refrigerant at the inlet position and a phase state of the refrigerant at the outlet position using the inlet temperature, the outlet temperature, the inlet pressure, and the outlet pressure based on phase change characteristics of the refrigerant including one or more temperatures of the refrigerant and one or more pressures of the refrigerant. The controller may be configured to determine the flow rate of the refrigerant based on the phase state of the refrigerant at the inlet position and based on the phase state of the refrigerant at the outlet position.

In some embodiments, the controller may be configured to reduce the flow rate of the refrigerant based on the phase state of the refrigerant at the inlet position and based on the phase state of the refrigerant at the outlet position if a difference between the inlet pressure and the outlet pressure may be less than a threshold value.

In some embodiments, the controller may be configured to reduce the flow rate of the refrigerant by a first value if the difference between the inlet pressure and the outlet pressure may be less than the threshold value and if the phase state of the refrigerant at the inlet position and the phase state of the refrigerant at the outlet position may be each a liquid state.

In some embodiments, the controller may be configured to reduce the flow rate of the refrigerant by a second value smaller than the first value if the difference between the inlet pressure and the outlet pressure may be less than the threshold value, if the phase state of the refrigerant at the inlet position may be a liquid state, and if the phase state of the refrigerant at the outlet position may be a mixed state of liquid and gas.

In some embodiments, the controller may be configured to reduce the flow rate of the refrigerant by a second value smaller than the first value if the difference between the inlet pressure and the outlet pressure may be less than the threshold value and if the phase state of the refrigerant at the inlet position and the phase state of the refrigerant at the outlet position may be each a mixed state of liquid and gas.

In some embodiments, the controller may be configured to increase the flow rate of the refrigerant based on the phase state of the refrigerant at the inlet position and the phase state of the refrigerant at the outlet position if the difference between the inlet pressure and the outlet pressure may be greater than or equal to the threshold value.

In some embodiments, the controller may be configured to increase the flow rate of the refrigerant by a third value if the difference between the inlet pressure and the outlet pressure may be greater than or equal to the threshold value, if the phase state of the refrigerant at the inlet position may be a liquid state, and if the phase state of the refrigerant at the outlet position may be a gas state.

In some embodiments, the controller may be configured to increase the flow rate of the refrigerant by a fourth value smaller than the third value if the difference between the inlet pressure and the outlet pressure may be greater than or equal to the threshold value, if the phase state of the refrigerant at the inlet position may be a liquid state, and if the phase state of the refrigerant at the outlet position may be a mixed state of liquid and gas.

In some embodiments, the controller may be configured to increase the flow rate of the refrigerant by a third value if the difference between the inlet pressure and the outlet pressure may be greater than or equal to the threshold value, if the phase state of the refrigerant at the inlet position may be a mixed state of liquid and gas, and if the phase state of the refrigerant at the outlet position may be a gas state.

In some embodiments, the controller may be configured to increase the flow rate of the refrigerant by a fourth value smaller than a third value if the difference between the inlet pressure and the outlet pressure may be greater than or equal to the threshold value and if the phase state of the refrigerant at the inlet position and the phase state of the refrigerant at the outlet position may be each a mixed state of liquid and gas.

According to an aspect of the present disclosure, a battery boiling cooling method may include obtaining (1) an inlet temperature, which may be a temperature of a refrigerant measured at an inlet position where the refrigerant flows into a cooling flow path, the refrigerant including a phase-change material that changes between liquid and gas phases, (2) an outlet temperature, which may be a temperature of the refrigerant measured at a position where the refrigerant flows out of the cooling flow path, (3) an inlet pressure, which may be a pressure of the refrigerant measured at the inlet position, and (4) an outlet pressure, which may be a pressure of the refrigerant measured at an outlet position and controlling a flow rate of the refrigerant based on the inlet temperature, the outlet temperature, the inlet pressure, and the outlet pressure.

In some embodiments, controlling the flow rate of the refrigerant based on the inlet temperature, the outlet temperature, the inlet pressure, and the outlet pressure may include estimating a phase state of the refrigerant at the inlet position and the phase state of the refrigerant at the outlet position using the inlet temperature, the outlet temperature, the inlet pressure, and the outlet pressure based on phase change characteristics of the refrigerant including one or more temperatures of the refrigerant and one or more pressures of the refrigerant and determining the flow rate of the refrigerant based on the phase state of the refrigerant at the inlet position and based on the phase state of the refrigerant at the outlet position.

In some embodiments, determining the flow rate of the refrigerant based on the phase state of the refrigerant at the inlet position and based on the phase state of the refrigerant at the outlet position may include reducing the flow rate of the refrigerant based on the phase state of the refrigerant at the inlet position and based on the phase state of the refrigerant at the outlet position if a difference between the inlet pressure and the outlet pressure may be less than a threshold value and increasing the flow rate of the refrigerant based on the phase state of the refrigerant at the inlet position and based on the phase state of the refrigerant at the outlet position if the difference between the inlet pressure and the outlet pressure may be greater than the threshold value.

In some embodiments, reducing the flow rate of the refrigerant based on the phase state of the refrigerant at the inlet position and based on the phase state of the refrigerant at the outlet position may include reducing the flow rate of the refrigerant by a first value if the phase state of the refrigerant at the inlet position and the phase state of the refrigerant at the outlet position may be each a liquid state and reducing the flow rate of the refrigerant by a second value smaller than the first value if the phase state of the refrigerant at the inlet position may be a liquid state and if the phase state of the refrigerant at the outlet position may be a mixed state of liquid and gas.

In some embodiments, reducing the flow rate of the refrigerant based on the phase state of the refrigerant at the inlet position and based on the phase state of the refrigerant at the outlet position may further include reducing the flow rate of the refrigerant by a third value smaller than the first value if the phase state of the refrigerant at the inlet position and the phase state of the refrigerant at the outlet position may be each a mixed state of liquid and gas.

In some embodiments, the battery boiling cooling method may further include setting at least one of the second value and the third value to be 0.

In some embodiments, increasing the flow rate of the refrigerant based on the phase state of the refrigerant at the inlet position and based on the phase state of the refrigerant at the outlet position may include increasing the flow rate of the refrigerant by a third value if the phase state of the refrigerant at the inlet position may be a liquid state and if the phase state of the refrigerant at the outlet position may be a gas state and increasing the flow rate of the refrigerant by a fourth value smaller than the third value if the phase state of the refrigerant at the inlet position may be a liquid state and if the phase state of the refrigerant at the outlet position may be a mixed state of liquid and gas.

In some embodiments, the battery boiling cooling method may further include setting the fourth value to be 0.

In some embodiments, increasing the flow rate of the refrigerant based on the phase state of the refrigerant at the inlet position and based on the phase state of the refrigerant at the outlet position may include increasing the flow rate of the refrigerant by a third value if the phase state of the refrigerant at the inlet position may be a mixed state of liquid and gas and if the phase state of the refrigerant at the outlet position may be a gas state and increasing the flow rate of the refrigerant by a fourth value smaller than the third value if the phase state of the refrigerant at the inlet position and the phase state of the refrigerant at the outlet position may be each a mixed state of liquid and gas.

### BRIEF DESCRIPTION OF THE DRAWINGS

FIG. 1 shows a battery boiling cooling system according to some embodiments of the present disclosure.
FIG. 2 shows a graph of phase change characteristics of a refrigerant according to some embodiments of the present disclosure.
FIG. 3 shows a method of determining a flow rate of refrigerant in a controller of the battery boiling cooling system, illustrated in FIG. 1, according to some embodiments of the present disclosure.
FIG. 4 shows the graph of the phase change characteristics of the refrigerant, illustrated in FIG. 2, where both a phase state of the refrigerant at an inlet position and a phase state of the refrigerant at an outlet position are liquid according to some embodiments of the present disclosure.
FIG. 5 is a flowchart illustrating step S350, in FIG. 3, according to some embodiments of the present disclosure.
FIG. 6 shows the graph of the phase change characteristics of the refrigerant, illustrated in FIG. 2, where both a phase state of the refrigerant at an inlet position and a phase state of the refrigerant at an outlet position are mixed according to some embodiments of the present disclosure.
FIG. 7 is a flowchart illustrating step S370, in FIG. 3, according to some embodiments of the present disclosure.
FIG. 8 shows the graph of the phase change characteristics of the refrigerant, illustrated in FIG. 2, where a phase state of the refrigerant at an inlet position is liquid or mixed and a phase state of the refrigerant at an outlet position is gas according to some embodiments of the present disclosure.
FIG. 9 is a diagram illustrating a battery boiling cooling system according to some embodiments of the present disclosure.

### DETAILED DESCRIPTION

Some exemplary embodiments will be described more fully hereinafter with reference to the accompanying drawings; however, the exemplary embodiments may be altered, and the disclosure should not be construed as limited to the embodiments set forth hereinafter. Rather, the exemplary embodiments are provided so that this disclosure will be thorough and complete, and will fully convey exemplary implementations of the present invention to those skilled in the art. The drawings and description are to be regarded as illustrative in nature and are not restrictive. The same reference numerals designate the same or similar elements throughout the specification. In flowcharts described with reference to the drawings hereinafter, the order of operations may be changed, several operations may be merged, some operations may be divided, and specific operations may not be performed.

Throughout the specification and claims, if a part is referred to "include" a certain element, it may mean that it may further include other elements rather than exclude other elements, unless specifically indicated otherwise.

In addition, expressions described in the singular may be interpreted in the singular or plural unless explicit expressions such as "one" or "single" are used.

In addition, terms including an ordinal number, such as first, second, etc., may be used to describe various elements, but the elements are not limited by the terms. The above terms are used only for the purpose of distinguishing one element from another element. For example, without departing from the scope of the present disclosure, a first element may be referred to as a second element, and similarly, a second element may be referred to as a first element.

Furthermore, if a component is referred to be "connected" to another component, it includes not only the case where two components are "directly connected" but also the case where two components are "indirectly connected or connected without contact" to another component interposed therebetween, or the case where two components are "electrically connected." On the other hand, if an element is referred to as "directly connected" to another element, it should be understood that no other element exists in the middle.

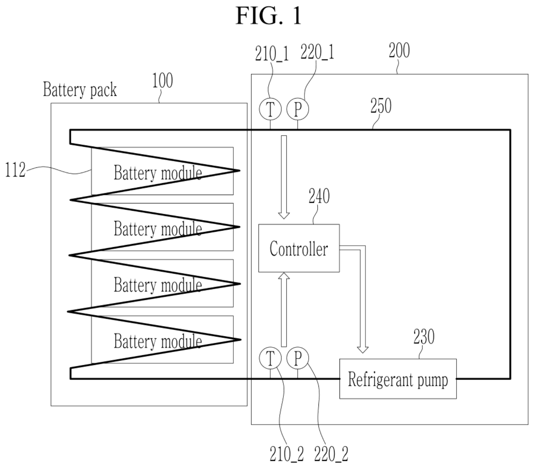

FIG. 1 shows a battery boiling cooling system according to some embodiments of the present disclosure.

Referring to FIG. 1, a battery boiling cooling system 200 may control a temperature of a battery pack 100 by using latent heat of a phase change so that the battery pack 100 may maintain a normal operating temperature.

The battery pack 100 may include a plurality of battery modules 112.

Each of the plurality of battery modules 112 may include a plurality of battery cells electrically connected to one another in series and/or in parallel.

The battery boiling cooling system 200 may include an inlet temperature sensor 210_1, an outlet temperature sensor 210_2, an inlet pressure sensor 220_1, an outlet pressure sensor 220_2, a refrigerant pump 230, a controller 240, and a cooling flow path 250.

The cooling flow path 250 may be installed on the plurality of battery modules 112 within the battery pack 100 and may be connected to the refrigerant pump 230. The cooling flow path 250 may be positioned adjacent to the plurality of battery modules 112 so as to cool the plurality of battery modules 112 within the battery pack 100 via a coolant. The cooling flow path 250 may be formed in a loop shape so that the refrigerant provided from the refrigerant pump 230 passes through the plurality of battery modules 112 in the battery pack 100 through the cooling flow path 250 and returns to the refrigerant pump 230. Based on a direction in which the refrigerant moves within the cooling flow path 250, a part where the refrigerant flows into the cooling flow path 250 is called an inlet position, and a part where the refrigerant flows out through the cooling flow path 250 is called an outlet position. In some embodiments, the inlet position may be the position where coolant is introduced into the battery pack 100 through the cooling flow path 250. In some embodiments, the outlet position may be a position where coolant flows out of the battery pack 100 through the cooling flow path 250.

The refrigerant may be a liquid having a boiling point lower than the normal operating temperature range of the battery pack 100 and may be a phase-change material. During the phase change process of a phase-change material, an applied heat is used for the phase change. A phase change phenomenon has the effect of stabilizing the temperature by temporarily preventing temperature change until the phase change is complete.

The inlet temperature sensor 210_1 may be installed at the inlet position and may measure a temperature of the refrigerant in the cooling flow path 250 at the inlet position. The temperature of the refrigerant measured at the inlet position by the inlet temperature sensor 210_1 is called an inlet temperature of the refrigerant.

The outlet temperature sensor 210_2 may be installed at the outlet position and may measure the temperature of the refrigerant in the cooling flow path 250 at the outlet position. The temperature of the refrigerant measured at the outlet position by the outlet temperature sensor 210_2 is called an outlet temperature of the refrigerant.

The inlet pressure sensor 220_1 may be installed at the inlet position and may measure the pressure of the refrigerant in the cooling flow path 250 at the inlet position. The pressure of the refrigerant measured at the inlet position by the inlet pressure sensor 220_1 is called an inlet pressure of the refrigerant.

The outlet pressure sensor 220_2 may be installed at the outlet position and may measure the pressure of the refrigerant in the cooling flow path 250 at the outlet position. The pressure of the refrigerant measured at the outlet position by the outlet pressure sensor 220_2 is called an outlet pressure of the refrigerant.

The refrigerant pump 230 may control a flow rate of refrigerant in the cooling flow path 250. The refrigerant pump 230 may reduce, increase, or maintain the flow rate of the refrigerant according to a flow rate control signal of the controller 240.

The controller 240 may determine the flow rate of the refrigerant pump 230 based on the inlet temperature and outlet temperature of the refrigerant (and based on the inlet pressure and outlet pressure of the refrigerant), may generate the flow rate control signal for controlling the flow rate of the refrigerant pump 230, and may transmit the flow rate control signal to the refrigerant pump 230.

According to some embodiments, the controller 240 may determine a phase state of the refrigerant based on the inlet temperature and the outlet temperature of the refrigerant (and based on the inlet pressure and the outlet pressure of the refrigerant) by referring to the phase change characteristics of the refrigerant and may determine the flow rate of the refrigerant based on the phase state of the refrigerant.

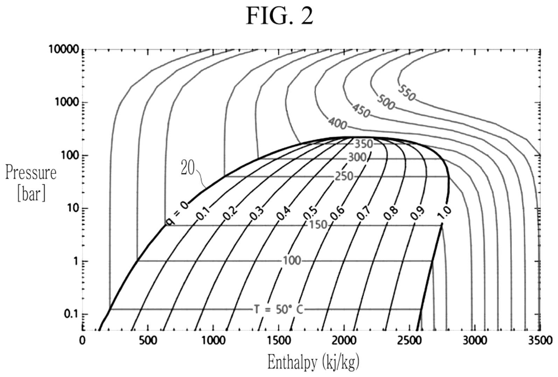

FIG. 2 shows a graph of phase change characteristics of a refrigerant according to some embodiments of the present disclosure.

Referring to FIG 2, a pressure-enthalpy diagram may be used to analyze phase changes and states of substances in various thermodynamic situations.

The pressure-enthalpy diagram is a diagram that may analyze phase changes by changing the states (temperature, pressure, enthalpy) during a phase change process of a refrigerant.

In the pressure-enthalpy diagram, since the phase state crosses a phase boundary as temperature and pressure change, a phase change may be estimated.

A refrigerant may have a pressure-enthalpy diagram (showing pressure and enthalpy as a function of temperature), as illustrated in FIG. 2, for example.

In FIG. 2, q=0 represents a saturated liquid, and q=1 represents a saturated vapor. 0<q<1 may indicate that the saturated liquid and the saturated vapor are mixed. Accordingly, a left side of the solid line 20 represents a liquid state, a right side of the solid line 20 may represent a gas state, and an internal space of the solid line 20 may represent a state in which liquid and gas are mixed. The closer q is to 0, the greater a specific gravity of the saturated liquid, and the closer q is to 1, the greater a specific gravity of the saturated vapor.

The phase change characteristics of the refrigerant according to temperature and pressure may be stored in the controller 240 as a phase-change-characteristics table.

The controller 240 may estimate the phase state of the refrigerant at the inlet position and at the outlet position from the inlet temperature and the outlet temperature, respectively, the inlet pressure and the outlet pressure corresponding to the phase change characteristic table, and the controller 240 may determine the flow rate of the refrigerant pump 230 based on the phase state of the refrigerant at the inlet position and at the outlet position.

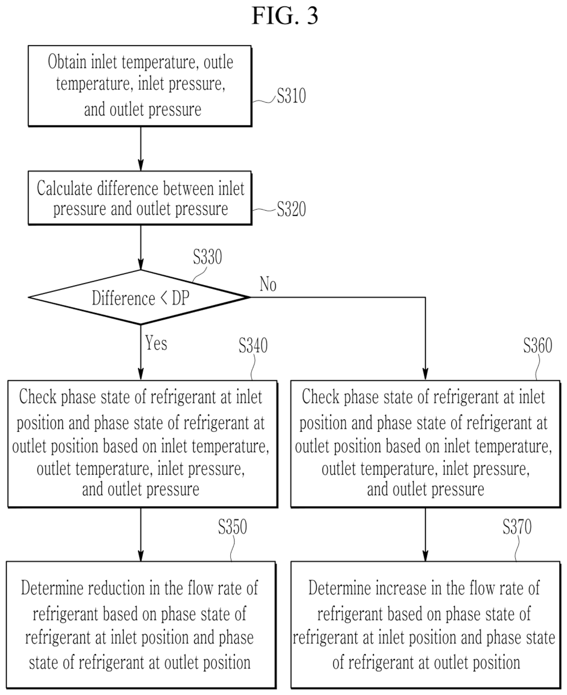

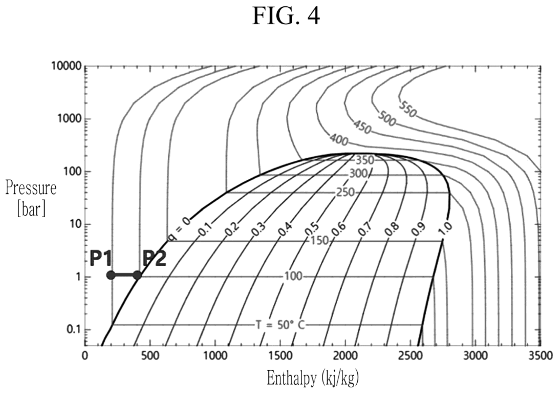

FIG. 3 shows a method of determining a flow rate of refrigerant in a controller of the battery boiling cooling system, illustrated in FIG. 1, according to some embodiments of the present disclosure. FIG. 4 shows the graph of the phase change characteristics of the refrigerant, illustrated in FIG. 2, where both a phase state of the refrigerant at an inlet position and a phase state of the refrigerant at an outlet position are liquid according to some embodiments of the present disclosure.

Referring to FIG. 3, the controller 240 may obtain the inlet temperature, the outlet temperature, the inlet pressure, and the outlet pressure S310.

The controller 240 may calculate a difference between the inlet pressure and the outlet pressure S320.

The controller 240 may compare the difference between the inlet pressure and the outlet pressure with a threshold value DP S330. The threshold value DP may be determined based on the system design.

If the difference between the inlet pressure and the outlet pressure is less than the threshold value DP, the controller 240 may check the phase state of the refrigerant at the inlet position and the phase state of the refrigerant at the outlet position based on the inlet temperature, the outlet temperature, the inlet pressure, and the outlet pressure S340. The controller 240 may check the phase state of the refrigerant at the inlet position and the phase state of the refrigerant at the outlet position from the inlet temperature, the outlet temperature, the inlet pressure, and the outlet pressure with reference to the phase change characteristics of the refrigerant as illustrated in FIG. 2.

As shown in FIG. 4, if the phase state of the refrigerant at the inlet position is at position P1 and the phase state of the refrigerant at the outlet position is at position P2 from the inlet temperature, the outlet temperature, the inlet pressure, and the outlet pressure, the controller 240 may estimate that the phase state of the refrigerant at the inlet position is a liquid state and that the phase state of the refrigerant at the outlet position is also a liquid state.

The controller 240 may reduce the flow rate of the refrigerant based on the phase state of the refrigerant at the inlet position and the phase state of the refrigerant at the outlet position S350.

In some embodiments, the controller 240 may reduce the flow rate of the refrigerant if the difference between the inlet pressure and the outlet pressure is less than the threshold value DP. The controller 240 may control the amount of reduction in the flow rate of the refrigerant based on the phase state of the refrigerant at the inlet position and the phase state of the refrigerant at the outlet position.

Meanwhile, if the difference between the inlet pressure and the outlet pressure is greater than or equal to the threshold value DP, the controller 240 may check the phase state of the refrigerant at the inlet position and the phase state of the refrigerant at the outlet position based on the inlet temperature, the outlet temperature, the inlet pressure, and the outlet pressure S360. The controller 240 may check the phase state of the refrigerant at the inlet position and the phase state of the refrigerant at the outlet position from the inlet temperature, the outlet temperature, the inlet pressure, and the outlet pressure with reference to the phase change characteristics of the refrigerant as illustrated in FIG. 2.

The controller may increase in the flow rate of the refrigerant based on the phase state of the refrigerant at the inlet position and the phase state of the refrigerant at the outlet position S370.

According to some embodiments, the controller 240 may increase the flow rate of the refrigerant if the difference between the inlet pressure and the outlet pressure is greater than or equal to the threshold value DP. The controller 240 may control an amount of an increase in the flow rate of the refrigerant based on the phase state of the refrigerant at the inlet position and the phase state of the refrigerant at the outlet position.

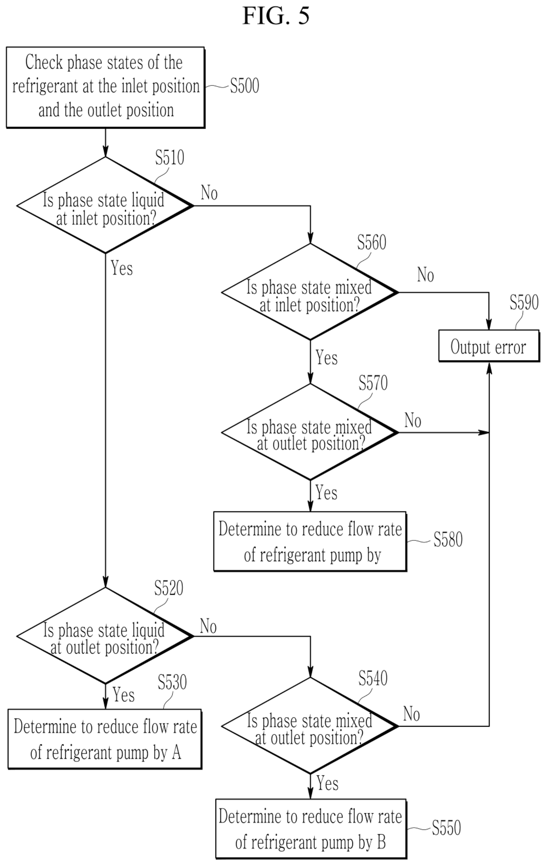

FIG. 5 is a flowchart illustrating step S350, in FIG. 3, according to some embodiments of the present disclosure.

Referring to FIG. 5, if the difference between the inlet pressure and the outlet pressure is less than the threshold value DP, the controller 240 may check the phase state of the refrigerant at the inlet position and the phase state of the refrigerant at the outlet position based on the inlet temperature, the outlet temperature, the inlet pressure, and the outlet pressure S500.

The controller 240 may check whether the phase state of the refrigerant is a liquid state at the inlet position S510.

If the phase state of the refrigerant at the inlet position is liquid, the controller 240 may check whether the phase state at the outlet position is a liquid state S520.

The controller 240 may reduce the flow rate of the refrigerant pump 230 by a first value, if the difference between the inlet pressure and the outlet pressure is less than the threshold value DP, and if both the phase state of the refrigerant at the inlet position and the phase state of the refrigerant at the outlet position are liquid states S530.

As shown in Fig. 4, if there is little difference between the inlet pressure and the outlet pressure, and, when the phase state of the refrigerant at the inlet position is at the P1 position and the phase state of the refrigerant at the outlet position is at the P2 position, sufficient cooling may be achieved even with single liquid cooling. Therefore, the controller 240 may increase system efficiency by reducing the flow rate of the refrigerant pump 230 by the first value.

The controller 240 may check whether the phase state of the refrigerant at the outlet position is mixed if the phase state of the refrigerant at the inlet position is liquid and the phase state of the refrigerant at the outlet position is not liquid S540. The mixed may refer to a state where liquid and gas are mixed.

The controller 240 may reduce the flow rate of the refrigerant pump 230 by a second value B, if the phase state of the refrigerant at the inlet position is liquid and if the phase state at the outlet position is mixed S550. The first value may be a greater value than the second value B.

In some embodiments, the controller 240 may maintain the flow rate of the refrigerant pump 230 if the phase state of the refrigerant at the inlet position is liquid and the phase state at the outlet position is mixed. In some embodiments, the second value may be set to 0, but such a setting may vary depending on a system design.

If the phase state of the refrigerant at the inlet position is liquid, it is rare for the phase state at the outlet position to appear as gas. Therefore, if the phase state of the refrigerant at the inlet position is a liquid state and the phase state at the outlet position appears to be a gas state, the controller 240 may output an error S590.

Meanwhile, if the phase state of the refrigerant at the inlet position is not liquid, the controller 240 may check whether the phase state of the refrigerant at the inlet position is mixed S560.

If the phase state of the refrigerant at the inlet position is mixed, the controller 240 may check whether the phase state of the refrigerant at the outlet position is mixed S570.

The controller 240 may reduce the flow rate of the refrigerant pump 230 by B if the difference between the inlet pressure and the outlet pressure is less than the threshold value DP and if the phase state of the refrigerant at the inlet position and the phase state of the refrigerant at the outlet position are both mixed S580.

In some embodiments, the controller 240 may maintain the flow rate of the refrigerant pump 230 if the difference between the inlet pressure and the outlet pressure is less than the threshold value DP and if the phase state of the refrigerant at the inlet position and the phase state of the refrigerant at the outlet position are both mixed. In some embodiments, B may be set to 0, a setting which may vary depending on the system design.

In some embodiments, the controller 240 may reduce the flow rate of the refrigerant pump 230 by a value less than the first value and different from the second value if the difference between the inlet pressure and the outlet pressure is less than the threshold value DP and if the phase state of the refrigerant at the inlet position and the phase state of the refrigerant at the outlet position are both mixed.

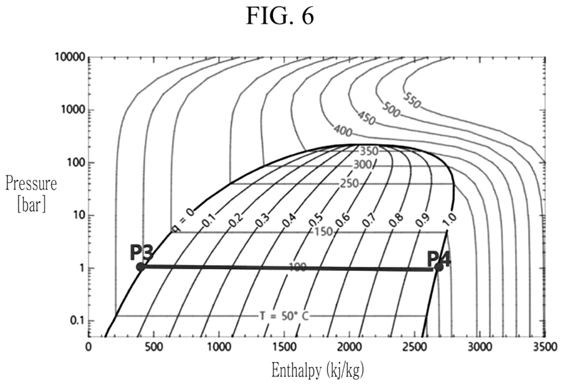

FIG. 6 shows the graph of the phase change characteristics of the refrigerant, illustrated in FIG. 2, where both a phase state of the refrigerant at an inlet position and a phase state of the refrigerant at an outlet position are mixed according to some embodiments of the present disclosure.

As shown in FIG. 6, if there is little difference between the inlet pressure and the outlet pressure and if the phase state of the refrigerant at the inlet position and the phase state of the refrigerant at the outlet position are located on a straight line between the P3 position and the P4 position, the controller 240 may determine that cooling is occurring appropriately. Accordingly, the controller 240 may reduce or may maintain the flow rate of the refrigerant pump 230 by B or may maintain the flow rate of the refrigerant pump 230.

Meanwhile, if the phase state of the refrigerant at the inlet position is gas, a condenser of the refrigerant pump 230 or the refrigerant pump 230 may be defective, so the controller 240 may output an error S590.

In addition, a situation where the phase state of the refrigerant at the inlet position is mixed and the phase state of the refrigerant at the outlet position is not mixed rarely happens, and the controller 240 may output an error if that situation occurs S590.

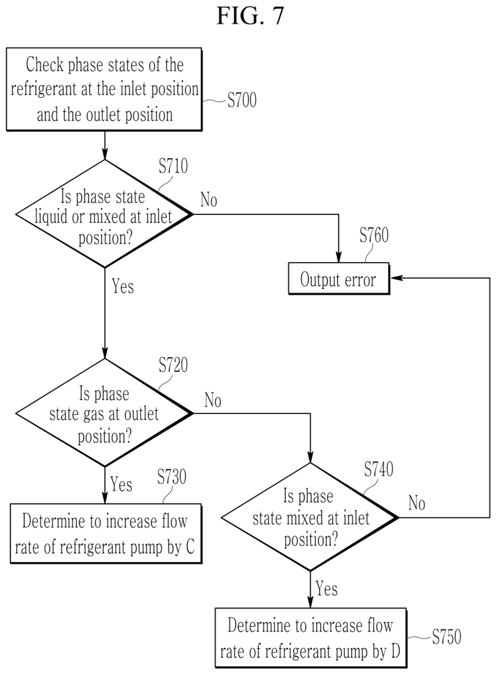

FIG. 7 is a flowchart illustrating step S370, in FIG. 3, according to some embodiments of the present disclosure.

Referring to FIG. 7, if the difference between the inlet pressure and the outlet pressure is greater than or equal to the threshold value DP, the controller 240 may check the phase state of the refrigerant at the inlet position and the phase state of the refrigerant at the outlet position based on the inlet temperature, the outlet temperature, the inlet pressure, and the outlet pressure S700.

The controller 240 may check whether the phase state of the refrigerant at the inlet location is liquid or mixed S710.

If the phase state of the refrigerant at the inlet position is liquid or mixed, the controller 240 may check whether the phase state of the refrigerant at the outlet position is gas S720.

If the phase state of the refrigerant at the inlet position is liquid or mixed and the phase state of the refrigerant at the outlet position is gas S720, the controller 240 may increase the flow rate of the refrigerant pump by C S730.

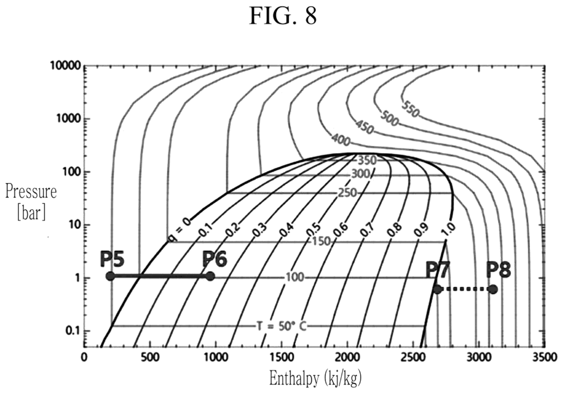

FIG. 8 shows the graph of the phase change characteristics of the refrigerant, illustrated in FIG. 2, where a phase state of the refrigerant at an inlet position is liquid or mixed and a phase state of the refrigerant at an outlet position is gas according to some embodiments of the present disclosure.

As shown in FIG. 8, if the difference between the inlet pressure and the outlet pressure is large, if the phase state of the refrigerant at the inlet position is located on a straight line between positions P5 and P6, and if the phase state of the refrigerant at the outlet position is located on a straight line between positions P7 and P8, the phase state of the refrigerant at the inlet position is liquid or mixed, and the phase state of the refrigerant at the outlet position is gas. If the difference between the inlet temperature and the outlet temperature is very large, if the difference between the inlet pressure and the outlet pressure is also large, and if the outlet pressure decreases significantly compared to the inlet pressure, it may be determined that cooling is insufficient. In some embodiments, when stability of the battery boiling cooling system is significantly reduced due to a lack of cooling, the controller 240 may increase the flow rate of the refrigerant pump 230.

If the phase state of the refrigerant at the inlet position is liquid or mixed and the phase state of the refrigerant at the outlet position is mixed S740, the controller 240 may increase the flow rate of the refrigerant pump 230 by D S750. C may be a greater value than D.

In some embodiments, if the phase state of the refrigerant at the inlet position is liquid or mixed and the phase state of the refrigerant at the outlet position is mixed S740, the controller 240 may maintain the flow rate of the refrigerant pump 230. In some embodiments, D may be set to 0, but such a setting may vary depending on a design of the battery boiling cooling system.

Meanwhile, if the phase state of the refrigerant at the inlet position is liquid or mixed and if the phase state of the refrigerant at the outlet position is neither gas nor mixed but is, instead, liquid, the controller 240 may determine that there is a defect in the evaporator and output an error S760.

In addition, if the phase state of the refrigerant is gas at the inlet position, the controller may determine that the condenser is defective and output an error S760.

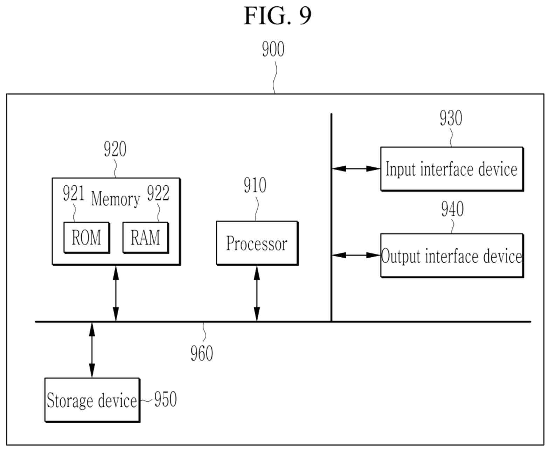

FIG. 9 is a diagram illustrating a battery boiling cooling system according to some embodiments of the present disclosure.

Referring to FIG. 9, the battery boiling cooling system 900 may represent a computing device in which the battery boiling cooling method described above is implemented.

The battery boiling cooling system 900 may include at least one of processor 910, a memory 920, an input interface device 930, an output interface device 940, and a storage device 950. Each component is connected to a bus 960 and may communicate with each other. In addition, each component may be connected through an individual interface or individual bus centered on the processor 910, rather than the bus 960.

The processor 910 may be implemented as various types such as an application processor (AP), a central processor (CPU), a graphics processor (GPU), etc., and may be any semiconductor device that executes a command stored in the memory 920 or storage device 950. The processor 910 may perform the battery boiling cooling function and operation described with reference to FIGS. 1 to 8 by executing program commands stored in at least one of the memory 920 and the storage device 950.

The memory 920 and storage device 950 may include various forms of volatile or non-volatile storage media. For example, the memory 920 may include a read-only memory (ROM) 921 and a random access memory (RAM) 922. In some embodiments, the memory 920 may be located inside or outside the processor 910, and the memory 920 may be connected to the processor 910.

The input interface device 930 may be configured to provide data to the processor 910. In some embodiments, the input interface device 930 may provide the inlet temperature, the outlet temperature, the inlet pressure, and the outlet pressure to the processor 910.

The output interface device 940 may be configured to output data from the processor 910. In some embodiments, the output interface device 940 may output a flow rate control signal of the controller 240 to the refrigerant pump 230.

At least some of the battery boiling cooling method according to the embodiment may be implemented as a program or software running on a computing device, and the program or software may be stored on a computer-readable medium.

In addition, at least some of the battery boiling cooling methods may be implemented in hardware that may be electrically connected to a computing device.

In some embodiments, the temperature of a battery may be effectively controlled by utilizing latent heat of a phase change, and a temperature gradient within the battery boiling cooling system, which is aggravated in a water-cooling system, may be reduced, thereby providing uniform cooling performance.

Exemplary embodiments have been disclosed herein, and although specific terms are employed, those terms are used and are to be interpreted in a general and descriptive sense only and are not for the purpose of limiting the present disclosure. In some instances, as would be apparent to one of ordinary skill in the art as of the filing of the present application, features, characteristics, and/or elements described in connection with a particular embodiment may be used singly or in combination with features, characteristics, and/or elements described in connection with some embodiments unless otherwise specifically indicated. Accordingly, it will be understood by those of skill in the art that various changes may be made to embodiments disclosed herein.

### <Description of representative reference symbols>

100: Battery Pack
112: Battery module
200: Battery boiling cooling system
210_1: Inlet temperature sensor
210_2: Outlet temperature Sensor
220_1: Inlet pressure sensor
220_2: Outlet pressure sensor
230: Refrigerant pump
240: Controller
250: Cooling flow path

## Claims

1. A battery boiling cooling system comprising:
an inlet temperature sensor (210_1) configured to measure an inlet temperature, which is a temperature of a refrigerant at an inlet position where the refrigerant flows into a cooling flow path (250), the refrigerant including a phase-change material that changes between liquid and gas phases;
an outlet temperature sensor (210_2) configured to measure an outlet temperature, which is a temperature of the refrigerant at an outlet position where the refrigerant flows out of the cooling flow path (250);
an inlet pressure sensor (220_1) configured to measure an inlet pressure, which is a pressure of the refrigerant at the inlet position;
an outlet pressure sensor (220_2) configured to measure an outlet pressure, which is a pressure of the refrigerant at the outlet position; and
a controller (240) configured to control a flow rate of the refrigerant based on the inlet temperature, the outlet temperature, the inlet pressure, and the outlet pressure.

2. The battery boiling cooling system as claimed in claim 1, wherein the controller (240) is configured to estimate a phase state of the refrigerant at the inlet position and a phase state of the refrigerant at the outlet position using the inlet temperature, the outlet temperature, the inlet pressure, and the outlet pressure based on phase change characteristics of the refrigerant including one or more temperatures of the refrigerant and one or more pressures of the refrigerant, and
wherein the controller (240) is configured to determine the flow rate of the refrigerant based on the phase state of the refrigerant at the inlet position and based on the phase state of the refrigerant at the outlet position.

3. The battery boiling cooling system as claimed in claim 2, wherein the controller (240) is configured to reduce the flow rate of the refrigerant based on the phase state of the refrigerant at the inlet position and based on the phase state of the refrigerant at the outlet position if a difference between the inlet pressure and the outlet pressure is less than a threshold value.

4. The battery boiling cooling system as claimed in claim 3, wherein the controller (240) is configured to reduce the flow rate of the refrigerant by a first value if the difference between the inlet pressure and the outlet pressure is less than the threshold value and if the phase state of the refrigerant at the inlet position and the phase state of the refrigerant at the outlet position are each a liquid state.

5. The battery boiling cooling system as claimed in claim 4, wherein the controller (240) is configured to reduce the flow rate of the refrigerant by a second value smaller than the first value if the difference between the inlet pressure and the outlet pressure is less than the threshold value, if the phase state of the refrigerant at the inlet position is a liquid state, and if the phase state of the refrigerant at the outlet position is a mixed state of liquid and gas.

6. The battery boiling cooling system as claimed in claim 4, wherein the controller (240) is configured to reduce the flow rate of the refrigerant by a second value smaller than the first value if the difference between the inlet pressure and the outlet pressure is less than the threshold value and if the phase state of the refrigerant at the inlet position and the phase state of the refrigerant at the outlet position are each a mixed state of liquid and gas.

7. The battery boiling cooling system as claimed any one of the claims 3 to 6, wherein the controller (240) is configured to increase the flow rate of the refrigerant based on the phase state of the refrigerant at the inlet position and the phase state of the refrigerant at the outlet position if the difference between the inlet pressure and the outlet pressure is greater than or equal to the threshold value.

8. The battery boiling cooling system as claimed in claim 7, wherein the controller (240) is configured to increase the flow rate of the refrigerant by a third value if the difference between the inlet pressure and the outlet pressure is greater than or equal to the threshold value, if the phase state of the refrigerant at the inlet position is a liquid state, and if the phase state of the refrigerant at the outlet position is a gas state.

9. The battery boiling cooling system as claimed in claim 8, wherein the controller (240) is configured to increase the flow rate of the refrigerant by a fourth value smaller than the third value if the difference between the inlet pressure and the outlet pressure is greater than or equal to the threshold value, if the phase state of the refrigerant at the inlet position is a liquid state, and if the phase state of the refrigerant at the outlet position is a mixed state of liquid and gas.

10. The battery boiling cooling system as claimed in anyone of the claims 7 to 9, wherein the controller (240) is configured to increase the flow rate of the refrigerant by a third value if the difference between the inlet pressure and the outlet pressure is greater than or equal to the threshold value, if the phase state of the refrigerant at the inlet position is a mixed state of liquid and gas, and if the phase state of the refrigerant at the outlet position is a gas state.

11. The battery boiling cooling system as claimed in anyone of the claims 7 to 10, wherein the controller (240) is configured to increase the flow rate of the refrigerant by a fourth value smaller than a third value if the difference between the inlet pressure and the outlet pressure is greater than or equal to the threshold value and if the phase state of the refrigerant at the inlet position and the phase state of the refrigerant at the outlet position are each a mixed state of liquid and gas.

12. A battery boiling cooling method comprising:
obtaining an inlet temperature, which is a temperature of a refrigerant measured at an inlet position where the refrigerant flows into a cooling flow path (250), the refrigerant including a phase-change material that changes between liquid and gas phases, an outlet temperature, which is a temperature of the refrigerant measured at a position where the refrigerant flows out of the cooling flow path (250), an inlet pressure, which is a pressure of the refrigerant measured at the inlet position, and an outlet pressure, which is a pressure of the refrigerant measured at an outlet position; and
controlling a flow rate of the refrigerant based on the inlet temperature, the outlet temperature, the inlet pressure, and the outlet pressure.

13. The battery boiling cooling method as claimed in claim 12, wherein controlling the flow rate of the refrigerant based on the inlet temperature, the outlet temperature, the inlet pressure, and the outlet pressure includes:
estimating a phase state of the refrigerant at the inlet position and the phase state of the refrigerant at the outlet position using the inlet temperature, the outlet temperature, the inlet pressure, and the outlet pressure based on phase change characteristics of the refrigerant including one or more temperatures of the refrigerant and one or more pressures of the refrigerant; and
determining the flow rate of the refrigerant based on the phase state of the refrigerant at the inlet position and based on the phase state of the refrigerant at the outlet position.

14. The battery boiling cooling method as claimed in claim 13, wherein determining the flow rate of the refrigerant based on the phase state of the refrigerant at the inlet position and based on the phase state of the refrigerant at the outlet position includes:
reducing the flow rate of the refrigerant based on the phase state of the refrigerant at the inlet position and based on the phase state of the refrigerant at the outlet position if a difference between the inlet pressure and the outlet pressure is less than a threshold value; and
increasing the flow rate of the refrigerant based on the phase state of the refrigerant at the inlet position and based on the phase state of the refrigerant at the outlet position if the difference between the inlet pressure and the outlet pressure is greater than or equal to the threshold value.

15. The battery boiling cooling method as claimed in claim 14, wherein reducing the flow rate of the refrigerant based on the phase state of the refrigerant at the inlet position and based on the phase state of the refrigerant at the outlet position includes:
reducing the flow rate of the refrigerant by a first value if the phase state of the refrigerant at the inlet position and the phase state of the refrigerant at the outlet position are each a liquid state; and
reducing the flow rate of the refrigerant by a second value smaller than the first value if the phase state of the refrigerant at the inlet position is a liquid state and if the phase state of the refrigerant at the outlet position is a mixed state of liquid and gas.
